**Europäisches Patentamt**

**European Patent Office**

**Office européen des brevets**

(19)

(11) **EP 1 107 157 A2**

(12) **EUROPEAN PATENT APPLICATION**

(43) Date of publication:
**13.06.2001 Bulletin 2001/24**

(51) Int Cl.$^7$: **G06F 17/60**

(21) Application number: **00480088.4**

(22) Date of filing: **28.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.12.1999 EP 99480129**

(71) Applicant: **INTERNATIONAL BUSINESS MACHINES CORPORATION**
**Armonk, NY 10504 (US)**

(72) Inventors:
• **Pavillon, Christelle**
  **75018 Paris (FR)**

• **Messatfa, Hammou**
  **92300 Levallois-Oerret (FR)**
• **Blanchard, Jean-Louis**
  **91480 Quincy Sous Senart (FR)**
• **Lorin, Stéphane**
  **75010 Paris (FR)**

(74) Representative: **de Pena, Alain et al**
**Compagnie IBM France**
**Département de Propriété Intellectuelle**
**06610 La Gaude (FR)**

(54) **System and method for performing predictive analysis**

(57) The present invention discloses a method and system for generating predictive models on evolutive data of the type stock market data. In a data processing system comprising a processor and data storage means containing a database of raw transactional data, the system of the invention provides means for creating a table of evolutive data from the raw transactional data. The table comprises a plurality of objects to be observed over a predefined period of time and a set of computational variables over which the plurality of objects are observed at successive discrete time points. The computational variables comprise a first variable to be predicted and a plurality of predictive variables. Temporary predictive models are build over the predefined period of time for each object within the table wherein each temporary predictive model provides a factor weight associated to each predictive variable. Next a cluster of the plurality of objects is performed based on the factor weight associated to each predictive variable wherein each cluster includes a subset of the plurality of objects, and for each subset of the plurality of objects, a predictive model is build using the set of computational variables over the predefined period of time.

Figure 2

EP 1 107 157 A2

## Description

## Technical field

The present invention relates to a system and method for performing predictive analysis and more particularly to such system and method for stock market predictive analysis.

## Background art

The recent data processing developments for stock market and the adoption of continuous marketing systems such as the CAC have enlarged the actors knowledge on the stock market behavior. From the 90's, the financial research have been concentrated on new matters such as "high frequency transaction data" and "market microstructure" which are characterized mainly by a large amount of financial inputs and very short delay market observations such as every hour or every second.

These new research axes allowed to analyze the process of making prices and the phenomena of price variations (volatility) by looking at market structure and all active financial insiders, in order to study the link between price formation and limit order books. In such system, investors make orders by putting limited quantity into the system with an associated price. Some of the demands and offers may not be satisfied if no counterpart exist to these orders. These unsolved orders make up the complete order book at a given time and are described in the well-known 'bid and ask' curves. The spread between bid and ask curves gives the way to compute liquidity and volatility factors on stocks. Liquidity refers to the possibility to exchange at any time and at a minimal cost any volume of stocks. Greater the spread is, harder will be the conditions to exchange the stocks.

The general state of the prior art with respect to solving the aforementioned problem may be best illustrated and understood with reference to the several following publications which deals with stock orders. In Hausman, Lo and Mac Kinlay (1992) titled "An Ordered Probit Analysis of Transaction Stock Prices", Journal of Financial Economics, vol. 31, 319-330, the authors describe a method in which price changes are modeled directly using a statistical model known as ordered probit. This technique is used most frequently in empirical studies of a dependent variable to be explained that take on only a finite number of values possessing a natural ordering. Such a model is the only specification that can easily capture the impact of explanatory variables on price changes while also accounting for price discreteness. In Gourieroux et al. "Etude du carnet d'ordres" sept.-oct. 1998, revue Banque & Marches, the relationship between the price transactions and the bid and ask functions is described, and in Engle, R.F.; Russell, J.R. "Forecasting the frequency of changes in quoted foreign exchange prices with the autoregressive conditional duration model", Journal of empirical Finance, pp. 187-212, an autoregressive Conditional Multinomial model for discrete valued time series is proposed in the context of generalized linear models.

The typical problems in the prior art solutions are generally that the intra-day predictive models are first computed stock by stock and then generalized to the whole market. This approach suffer a considerable limitation in that similarities between stocks as well as shades within a similarity are not interpreted.

Moreover, while the results obtained by such methods are of an easy interpretation by the actors, the prediction performance may be affected due to the parametric nature of such methods.

Some statistical methods based on neural networks offer more robustness such as the generic method described in U.S.5,461,699 from Arbabi and al. in which a system for forecasting combines a neural network with a statistical forecast. A neural network having an input layer, a hidden layer, and an output layer with each layer having one or more nodes is presented. Each node in the input layer is connected to each node in the hidden layer and each node in the hidden layer is connected to each node in the output layer. Each connection between nodes has an associated weight. One node in the input layer is connected to a statistical forecast that is produced by a statistical model. All other nodes in the input layer are connected to a different historical datum from the set of historical data. The neural network being operative by outputting a forecast, the output of the output layer nodes, when presented with input data. The weights associated with the connections of the neural network are first adjusted by a training device. The training device applies a plurality of training sets to the neural network, each training set consisting of historical data, an associated statistical output and a desired forecast, with each set of training data the training device determines a difference between the forecast produced by the neural network given the training data and the desired forecast, the training device then adjusts the weights of the neural network based on the difference.

In U.S.5,761,442 from Barr and al. a method for financial analysis is described. A data processing system and method for selecting securities and constructing an investment portfolio is based on a set of artificial neural networks which are designed to model and track the performance of each security in a given capital market and output a parameter which is related to the expected risk adjusted return for the security. Each artificial neural network is trained using a number of fundamental and price and volume history input parameters about the security and the underlying index. The system combines the expected return/appreciation potential data for each security via an optimization process to construct an investment portfolio which satisfies predetermined aggregate statistics. The data processing system receives input from the capital market and periodically evaluates the performance of the investment portfolio, rebalancing it whenever necessary to correct performance degradation.

A problem associated with these non parametric processes is to correctly determine which variables are significant for the prediction.

The present invention is directed towards solving these aforementioned problems. It is therefore an object of the invention to provide a method for generating predictive models which is computed over groups of stocks to provide a global view of stocks market.

This object is achieved by a robust iterative method which uses parametric models to provide clear and easy interpretable results.

**Summary of the invention**

The present invention discloses a method and system for generating predictive models on evolutive data. In accordance with a preferred embodiment of the present invention, the method runs in a data processing system comprising a processor and data storage means containing a database of stock market raw transactional data. The method consists in creating a table of evolutive data from the raw transactional data. The table comprises a plurality of objects to be observed over a predefined period of time and a set of computational variables over which the plurality of objects are observed at successive discrete time points. The computational variables comprise a first variable to be predicted and a plurality of predictive variables. Temporary predictive models are build over the predefined period of time for each object within the table wherein each temporary predictive model provides a factor weight associated to each predictive variable. Next a cluster of the plurality of objects is performed based on the factor weight associated to each predictive variable wherein each cluster includes a subset of the plurality of objects, and for each subset of the plurality of objects, a predictive model is build using the set of computational variables over the predefined period of time.

Preferably, the predictive models are build by applying a logistic regression method or by using a generalized linear model or an ordered probit model. The set of computational variables is preferably determined using a stepwise method while the clustering of the plurality of objects is performed either by using a hierarchical clustering or a relational analysis or a k-means method.

**Brief description of the drawings**

Figure 1 is a block diagram of a typical digital computer utilized by a preferred embodiment of the invention.

Figure 2 is an overview of the predictive process according to the present invention.

Figure 3 is a simplified representation of raw transactional data table as used by the process of the invention.

Figure 4 illustrates a 'bid and ask' curve for the preferred embodiment.

Figures 5-a and 5-b are detailed flow charts of the clustering step to be used in the predictive process of figure 2.

**Detailed description of the invention**

Preliminary to the description of the preferred embodiment, a definition of the most useful terms employed in the rest of the description is listed:

Generalized linear model : the generalized linear model is a generalization of classical linear models and includes as special cases linear regression, logistic regression, ordered probit regression and other kinds of models. Such models are used to explain variation of one variable (that is named variable to be predicted or dependent variable) with a subset of other variables (that are named predictive variables or explanatory variables). The result of this model is a function giving a weight factors to each predictive / explanatory variable.

Learning phase : to build a statistical model like a generalized linear model, two phases are to be considered: the learning phase and the testing phase. The learning phase is the phase where the model is built. For this, historical data are used where cases are recorded with all values known, values for the variable to be predicted and values for the predictive variables. Statistical model is then built to minimize the errors between the real value of the variable to be predicted and the estimated value by the model.

Testing phase : during the learning phase, the errors have been minimized and the model error is underestimate. To estimate the true model error, an other independent set of historical data is used. During this phase, the model built in learning phase is applied to all the records and the result is then compared to the real values, giving a more realistic estimation of the error model.

Logistic regression : logistic regression is a special case of the generalized linear model where the variable to be predicted is discrete and in general takes two values. Ordered probit model: ordered probit model is a special case of the generalized linear model where the variable to be predicted take on only a finite number of values possessing a natural ordering.

Robust methods : the statistical models like generalized linear models are designed to be the best possible when stringent assumptions apply. However, experience and further research have forced to recognize that classical techniques can behave badly when the practical situations departs from the ideal described by such assumptions. Robust methods are broading the effectiveness of statistical analyses. Robust methods more often involve iteration than do classical ones. Thus, instead of finding a solution in a single step, the method take an initial value and successively refine it, bringing it closer and closer to the final answer.

Ask function : the ask function gives the unit price that a buyer should pay if he wants to buy immediately a given volume. This function is an increasing function and is always above the bid function.

Bid function : the bid function gives the unit price that a seller should sell if he wants to sell immediately a given volume. This function is a decreasing function and is always underneath the ask function.

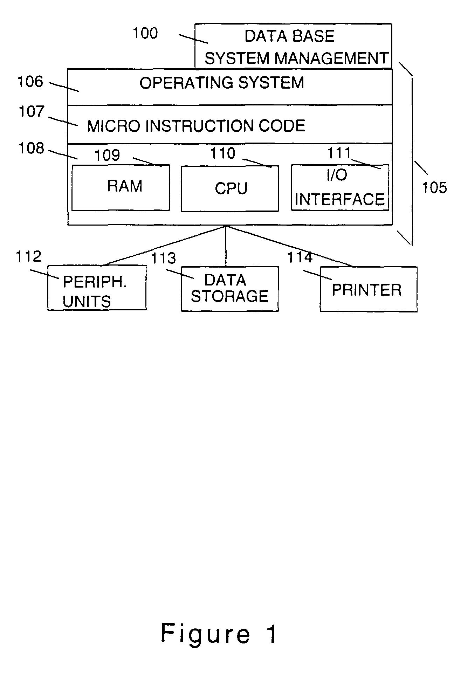

Referring now to the drawings, figure 1 illustrates an environment in which a preferred embodiment of the present invention operates. The preferred embodiment of the present invention operates on a computer platform 105. The computer platform 105 includes hardware units 108, including one or more Central Processing Unit (CPU) 110, a Random Access Memory (RAM) 109, and an input/output (I/O) interface 111. The computer platform 105 runs with an operating system 106, and may include micro instruction code 107. A data base management system 100 may be part of the micro instruction code 107 or an application program to be executed via the operating system. Raw transactional data giving status information relative to the particular application may be stored in any kind of local or remote data storage 113. Remote data storage may be accessible through modems and communication lines (not shown). The data may be collected from various sources and media such as written information, experts evaluations, or in-house historical. Various peripheral units 112 like terminals, disks or scanners may be connected to the computer platform 105 for inputting the data. The computer platform 105 could be a server terminal connected to multiple clients CPU. A user or an actor wishing to process the method of the invention would access the system through the I/O interface 111.

The I/O interface circuit could be as well a remote terminal with Internet like connection.

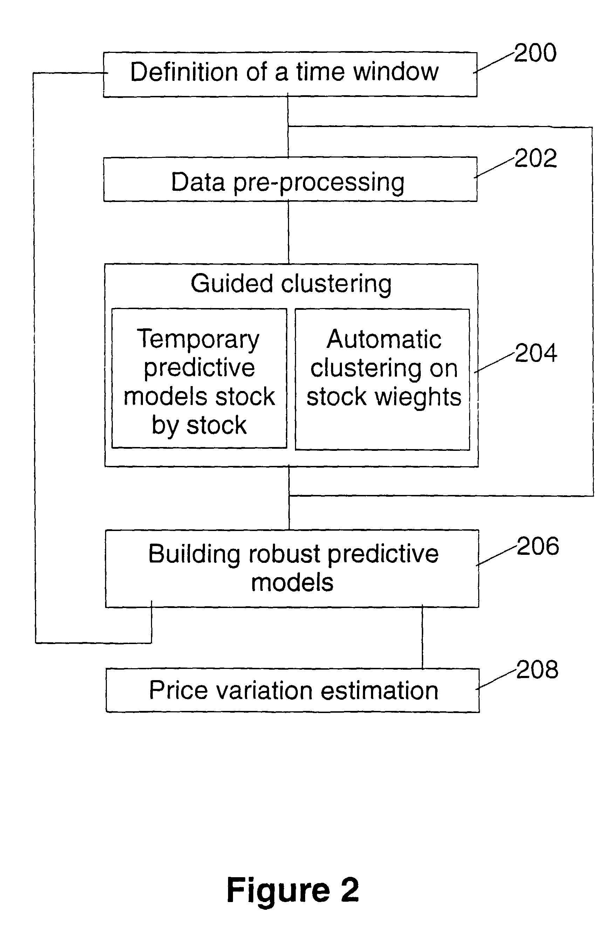

The prediction process is now described with reference to figure 2. The process starts at step 200, wherein a time window is defined for the learning phase of the prediction model. During this time period, raw transactional data are collected to be later processed to provide a prediction model for a specific variable. The model is further operated by users for predicting the specific variable. In the preferred implementation, the time window extends over one day, but any other time period may be defined, such as days or months depending on the particular application.

On step 202, the raw transactional data are preprocessed to be arranged in a table of evolutive data.

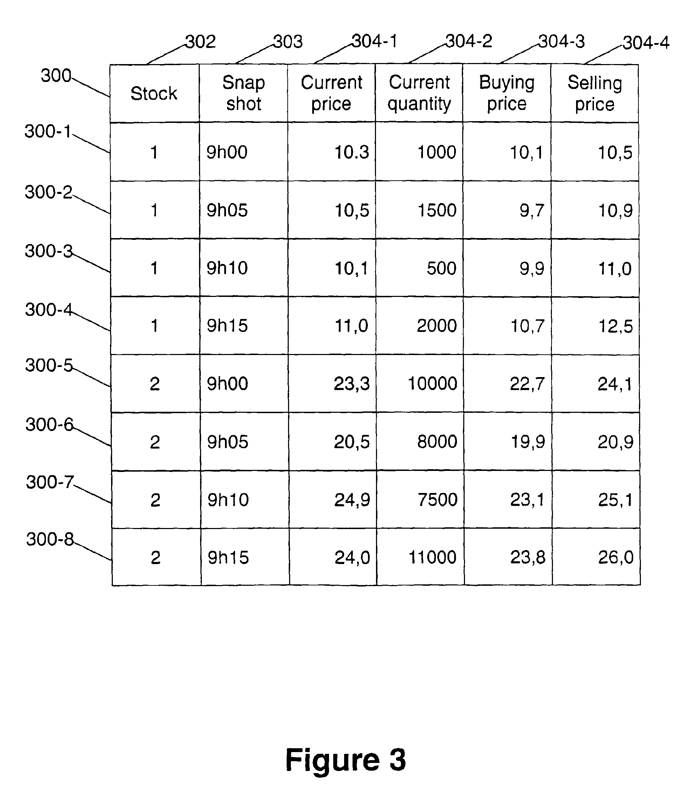

In the preferred implementation of stock trend analysis, the raw transactional data are a collection of information relating to the order books as it is now described with reference to figure 3.

Figure 3 is a simplified example of transactional data organized in a matrix 300 comprising 8 rows of stocks (301-1 to 301-8) and by 6 columns (302,303,304-1 to 304-4). In the first column 302, a first variable 'Stock' identifies the objects (the stocks) contained within the rows. The second column 303 is named 'Snapshot' to store the discrete time values (the snapshots) at which the stocks are observed (for example each five seconds along the time window, i.e. 24 hours). The last columns noted from 304-1 to 304-4 describes the parameters observed for each stock which are for example the current price 'P_Cur' on column 304-1, the current quantity 'Q_Cur' on column 304-2, the buy price 'P_Buy' on column 304-3 and the sell price 'P_Sel' on column 304-4.

Let's describe the content of a row 300-1 for a first stock 'S1'. On second column 303, the first observation time is fixed, i.e. 9.00 am. The current price of stock 'S1' at the first snapshot is stored within cell of column 304-1 and equal to 10,3. On column 304-2 the current quantity of first stock S1 at first snapshot is equal to 1000.

Column 304-3 gives the proposed price for buying this stock at the first snapshot, for example 10,1. The last column contains the value of the proposed selling price 10,5 at the first snapshot.

On the second row 300-2, the value of the observed parameters 304-1 to 304-4 are stored for the same stock S1 but at the next snapshot, i.e. at 9.05 am. The table is filled with each observation and at the end of the observation time period, the last row 300-8 contains the values of the measured parameters for the last stock S2 at the last snapshot (9.15 am).

It is obviously to be understood that for simplification of the description, only 8 rows and 6 columns are illustrated, but it is not to be interpreted as a limitation by the skill person and in application the number of rows and columns may be extended.

During the preprocessing step 202, the information contained within table 300 is first exploited in the form of the well-known 'bid and ask' curves in order to compute a set of computational variables associated to each object (each stock) at each snapshot. The set of variables comprises a first variable for which the prediction is sought (the variable to be predicted) and a plurality of predictive variables which reveals some interesting characteristics of the 'bid and ask' curves. The plurality of predictive variables are exploited during the process of the present invention as it will be detailed later. In the preferred implementation, the variable to be predicted is the stock price variation between two consecutive snapshots (t, t+1).

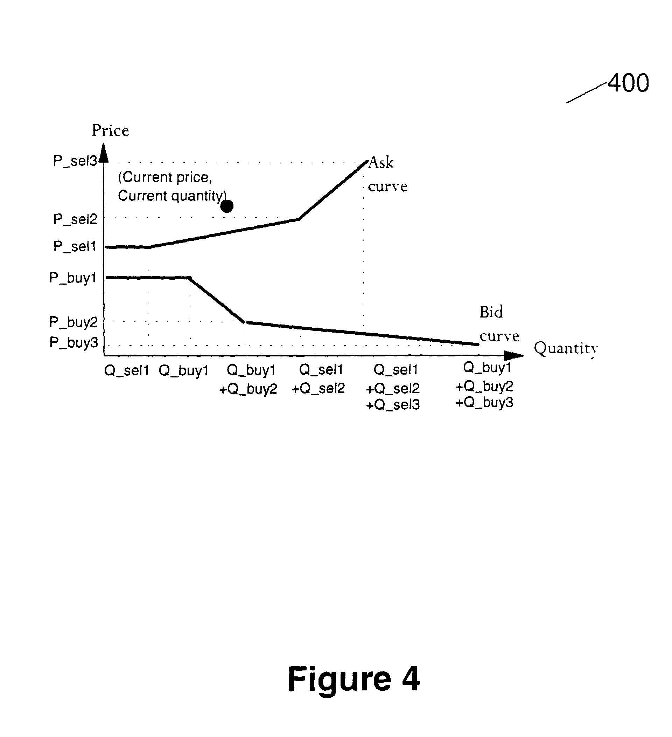

Figure 4 is a simplified representation of 'bid and ask' curves at a snapshot 't'. The abscissa of curve 400 details the quantities of stocks proposed by actors for buying (Q_buy) or for selling (Q_Sel) the stocks. The ordinate of curve 400 details the prices of stocks as proposed by actors for buying (P_buy) or for selling (P_Sel) the stocks. The lower curve illustrates the 'bid' curve while the higher curve illustrates the 'ask' curve. From curves 400, two groups of predictive variables are computed, a static group and a dynamic group. Static group includes predictive variables well-known in the field of stock exchange such as the spread, the depth, the median price, the buying slope and the selling slope which are described on a 'bid and ask' curves at a particular snapshot 't'. Dynamic group includes predictive variables which describe variations between two 'bid and ask' curves at two different snapshots, for example between snapshot 't' and snapshot 't-1' or between snapshot 't' and snapshot 't-2'. One preferred dynamic variable is the price and the quantity of a given stock at a given snapshot 't' as compared to a 'bid and ask' curve of a previous snapshot 't-1'.

Other dynamic predictive variables may be computed such as for example the price variation between snapshot 't-1' and snapshot 't'.

In the preferred embodiment, the initial collected parameters 304-1 to 304-4 which relate to the prices and the quantities of stocks proposed by actors either for buying or for selling are normalized before the static and the dynamic predictive variables are computed.

The following equations give the formulae to perform such standardisation. At each snapshot, each proposed price (buying or selling) is divided by the median price (Med-price) computed at the same snapshot as follows:

$$\text{Med-price (t)} = [P\_Sel1 (t) + P\_Buy1(t)] / 2$$

The standardized selling price value is therefore calculated as follows:

$$\text{Std-P\_Sel1 (t)} = P\_Sel1 (t) / \text{Med-price (t)},$$

and
the standardized buying price value is calculated as follows:

$$\text{Std-P\_Buy1(t)} = P\_Buy1(t) / \text{Med-price (t)}$$

Standardized values for prices and quantities at the different snapshots are respectively computed with corresponding equations.

Finally, the preprocessing step provides a set of computational variables including a first variable to be predicted and a plurality of static and dynamic predictive variables for each stock and each snapshot.

In alternate embodiment, the rows of the transactional data table are preferably filtered to select a number of rows having highest (positive or negative) values of the variable to be predicted.

On next step 204, a guided clustering of the data transformed by the preprocessing is performed in two operations.

In a first step, a temporary predictive model is computed for each stock over the set of snapshots. Each temporary predictive model provides a ponderation value or factor weight for each predictive variable. In a second step, an automatic clustering of the stocks is performed based on the ponderation value associated to each stock.

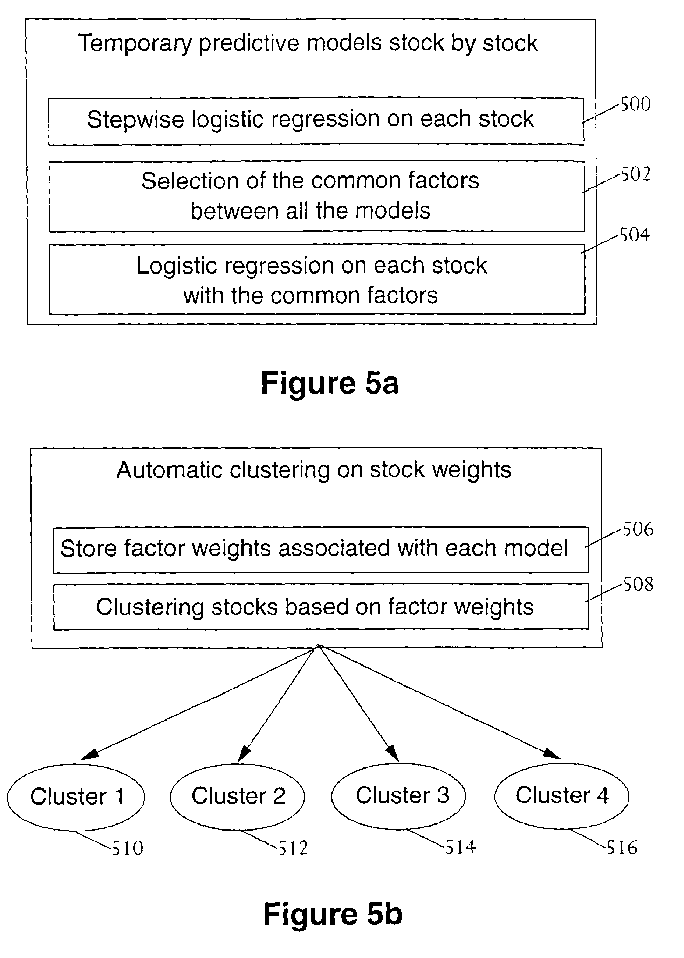

Figure 5-a and 5-b illustrates in more details the guided clustering operation 204. On step 500, a well-known stepwise logistic regression is performed on each stock over the set of snapshots. The result provides for each stock an intermediate temporary predictive model and a subset of the most discriminant predictive variables. In an alternate implementation, generalized linear models or ordered probit models may be used to provide the intermediate temporary predictive model in well-known fashion. Step 500 is run for all the stocks and for each stock the associated subset of the most discriminant predictive variables is stored within a memory area of the database system management 100.

On step 502, a new subset is selected among the whole subsets of the most discriminant predictive variables. In the preferred embodiment, the new subset includes the most frequently stored discriminant predictive variables. On next step 504, a logistic regression is performed in a well known manner on each stock with the new subset of the most frequently stored discriminant predictive variables. The result provides for each stock a temporary predictive model giving a ponderation value for each predictive variable.

On step 506 of figure 5-b, the computed weights are temporary stored within a memory area of the database system management 100.

On next step 508, the stocks are clustered into several groups denoted (510,512,514,516) based on the factor weights. In application, the clusters of stocks may be displayed to the users to offer a global view of the stock market.

Referring back to figure 2, step 206 consists in building a robust predictive model for each group of stocks (clusters 510 to 516) previously computed in step 204. For each cluster, a stepwise logistic regression is performed over a subset of the transformed data previously issued from step 202 and containing all stocks of the considered group with the corresponding snapshots. The result of step 206 provides a robust model for each group of stocks.

Finally on step 208, the robust predictive models are stored in local or remote databases to be run by a user to estimate the trend of the variable to be predicted. The process may loop back from step 206 to step 200 to update the robust predictive models if new raw transactional data are presented to the database system management 100.

Although the present invention has been fully described above with reference to specific embodiments, other alternative embodiments will be apparent to those of ordinary skill in the art. Therefore, the above description should not be taken as limiting the scope of the present invention which is defined by the appended claims.

## Claims

1. In a data processing system comprising a processor and data storage means containing a database of raw transactional data, a method for generating predictive models on evolutive data, the method comprising the steps of:

    a) creating a table of evolutive data from the raw transactional data, the table comprising a plurality of objects to be observed over a predefined period of time and a set of computational variables over which the plurality of objects are observed at successive discrete time points, said computational variables comprising a first variable to be predicted and a plurality of predictive variables;
    b) for each object within the table building a temporary predictive model over the predefined period of time, each temporary predictive model providing a factor weight associated to each predictive variable;
    c) clustering the plurality of objects based on the factor weight associated to each predictive variable, each cluster including a subset of the plurality of objects; and
    d) for each subset of the plurality of objects, building a predictive model over the predefined period of time using the set of computational variables.

2. The method of claim 1 wherein the step of creating a table further comprising the steps of:

    a1) extracting from the database a plurality of objects to be observed over a predefined period of time;
    a2) generating a set of computational variables from the raw transactional data comprising a first variable to be predicted and a plurality of predictive variables; and
    a3) computing at successive discrete time points the value of each variable for the plurality of objects.

3. The method of claim 1 or 2 wherein the plurality of predictive variables comprises static variables and dynamic variables.

4. The method of claim 1 wherein step b) of building temporary predictive models comprises the step of applying a method from the group of logistic regression or generalized linear model or ordered probit model.

5. The method of claim 1 wherein step d) of building predictive models comprises the step of applying a method from the group of logistic regression or generalized linear model or ordered probit model.

6. The method of claim 1 wherein the set of computational variables is determined using a stepwise method.

7. The method of claim 1 wherein step c) of clustering the plurality of objects is performed using a hierarchical clustering.

8. The method of claim 1 wherein step c) of clustering the plurality of objects is performed using relational analysis.

9. The method of claim 1 wherein step c) of clustering the plurality of objects is performed using a k-means method.

10. The method of claim 1 wherein the predictive models are build using neural networks.

11. The method of claim 1 further comprising the step of storing the predictive models in a database for user access.

12. The method of claim 11 wherein the predictive models are used for intra day analysis of stock market.

13. In a data processing system comprising a processor and data storage means containing a database of raw transactional data, a system for generating predictive models on evolutive data comprising:

    a) means for creating a table of evolutive data from the raw transactional data, the table comprising a plurality of objects to be observed over a predefined period of time and a set of computational variables over which the plurality of objects are observed at successive discrete time points, said computational variables comprising a first variable to be predicted and a plurality of predictive variables;
    b) means for building a temporary predictive model over the predefined period of time for each object within the table, each temporary predictive model providing a factor weight associated to each predictive variable;

c) means for clustering the plurality of objects based on the factor weight associated to each predictive variable, each cluster including a subset of the plurality of objects; and
d) means using the set of computational variables for building a predictive model over the predefined period of time for each subset of the plurality of objects.

14. The system of claim 13 wherein the means for creating a table further comprising:

   a1) means for extracting from the database a plurality of objects to be observed over a predefined period of time;
   a2) means for generating a set of computational variables from the raw transactional data comprising a first variable to be predicted and a plurality of predictive variables; and
   a3) means for computing at successive discrete time points the value of each variable for the plurality of objects.

15. The system of claim 13 or 14 wherein the plurality of predictive variables comprises static variables and dynamic variables.

16. The system of claim 13 wherein said means for building temporary predictive models further comprises means for applying either a logistic regression or a generalized linear model or an ordered probit model.

17. The system of claim 13 wherein said means for building predictive models further comprises means for applying either a logistic regression or a generalized linear model or an ordered probit model.

18. The system of claim 13 wherein the set of computational variables is determined using a stepwise method.

19. The system of claim 13 wherein step c) of clustering the plurality of objects is performed using a hierarchical clustering.

20. The system of claim 13 wherein step c) of clustering the plurality of objects is performed using relational analysis.

21. The system of claim 13 wherein step c) of clustering the plurality of objects is performed using a k-means method.

22. The system of claim 13 wherein the predictive models are build using neural networks.

23. The system of claim 13 further comprising means for storing the predictive models in a database for user access.

24. The system of claim 23 wherein the predictive models are used for intra day analysis of stock market.

25. A computer program product stored in memory executable by a processor for generating predictive models on evolutive data, in a database stored in a data processing system and containing raw transactional data, the product comprising:

   a) means for creating a table of evolutive data from the raw transactional data, the table comprising a plurality of objects to be observed over a predefined period of time and a set of computational variables over which the plurality of objects are observed at successive discrete time points, said computational variables comprising a first variable to be predicted and a plurality of predictive variables;
   b) means for building a temporary predictive model over the predefined period of time for each object within the table, each temporary predictive model providing a factor weight associated to each predictive variable;
   c) means for clustering the plurality of objects based on the factor weight associated to each predictive variable, each cluster including a subset of the plurality of objects; and
   d) means using the set of computational variables for building a predictive model over the predefined period of time for each subset of the plurality of objects.

100 — DATA BASE SYSTEM MANAGEMENT

106 — OPERATING SYSTEM

107 — MICRO INSTRUCTION CODE

108 —

109 — RAM

110 — CPU

111 — I/O INTERFACE

105

112 — PERIPH. UNITS

113 — DATA STORAGE

114 — PRINTER

# Figure 1

```
┌─────────────────────────────────────────┐
│      Definition of a time window         │──── 200
└─────────────────────────────────────────┘

┌─────────────────────────────────────────┐
│           Data pre-processing            │──── 202
└─────────────────────────────────────────┘

┌─────────────────────────────────────────┐
│           Guided clustering              │
│  ┌──────────────┐ ┌──────────────────┐   │
│  │  Temporary   │ │    Automatic     │   │──── 204
│  │  predictive  │ │  clustering on   │   │
│  │ models stock │ │  stock wieghts   │   │
│  │   by stock   │ │                  │   │
│  └──────────────┘ └──────────────────┘   │
└─────────────────────────────────────────┘

┌─────────────────────────────────────────┐
│     Building robust predictive           │──── 206
│               models                     │
└─────────────────────────────────────────┘

┌─────────────────────────────────────────┐
│       Price variation estimation         │──── 208
└─────────────────────────────────────────┘
```

# Figure 2

| 302 | 303 | 304-1 | 304-2 | 304-3 | 304-4 |
|---|---|---|---|---|---|
| Stock | Snap shot | Current price | Current quantity | Buying price | Selling price |
| 1 | 9h00 | 10.3 | 1000 | 10,1 | 10,5 |
| 1 | 9h05 | 10,5 | 1500 | 9,7 | 10,9 |
| 1 | 9h10 | 10,1 | 500 | 9,9 | 11,0 |
| 1 | 9h15 | 11,0 | 2000 | 10,7 | 12,5 |
| 2 | 9h00 | 23,3 | 10000 | 22,7 | 24,1 |
| 2 | 9h05 | 20,5 | 8000 | 19,9 | 20,9 |
| 2 | 9h10 | 24,9 | 7500 | 23,1 | 25,1 |
| 2 | 9h15 | 24,0 | 11000 | 23,8 | 26,0 |

300
300-1
300-2
300-3
300-4
300-5
300-6
300-7
300-8

# Figure 3

Figure 4

Temporary predictive models stock by stock

Stepwise logistic regression on each stock — 500

Selection of the common factors
between all the models — 502

— 504

Logistic regression on each stock
with the common factors

# Figure 5a

Automatic clustering on stock weights

Store factor weights associated with each model — 506

— 508

Clustering stocks based on factor weights

Cluster 1 — 510    Cluster 2 — 512    Cluster 3 — 514    Cluster 4 — 516

# Figure 5b